Europäisches Patentamt

European Patent Office

Office européen des brevets

(19)

(11) Veröffentlichungsnummer: **0 017 928**
**B1**

(12) **EUROPÄISCHE PATENTSCHRIFT**

(45) Veröffentlichungstag der Patentschrift: **11.04.84**

(21) Anmeldenummer: **80101950.6**

(22) Anmeldetag: **11.04.80**

(51) Int. Cl.³: **C 08 G 18/48,**
**C 08 G 18/14**

(54) Verfahren zur Herstellung von elastischen Formkörpern.

(30) Priorität: **24.04.79 DE 2916485**

(43) Veröffentlichungstag der Anmeldung:
**29.10.80 Patentblatt 80/22**

(45) Bekanntmachung des Hinweises auf die Patenterteilung:
**11.04.84 Patentblatt 84/15**

(84) Benannte Vertragsstaaten:
**BE DE FR GB IT NL SE**

(56) Entgegenhaltungen:
**DE - A - 2 211 914**
**GB - A - 1 365 015**
**GB - A - 1 493 120**
**US - A - 4 144 386**

(73) Patentinhaber: **BAYER AG**
**Konzernverwaltung RP Patentabteilung**
**D-5090 Leverkusen 1 Bayerwerk (DE)**

(72) Erfinder: **Meyborg, Holger, Dr.**
**Bergstrasse 92**
**D-5068 Odenthal (DE)**
Erfinder: **Weber, Christian, Dr.**
**Haferkamp 4**
**D-5000 Köln 80 (DE)**

Courier Press, Leamington Spa, England.

## Verfahren zur Herstellung von elastischen Formkörpern

Die vorliegende Erfindung betrifft ein verbessertes Einstufen-Verfahren zur Herstellung elastischer Formkörper mit einer geschlossenen Oberflächenschicht mittels der Reaktionssprizgußtechnik, in welchem hochreaktive Systeme aus Polyisocyanaten, höhermolekularen Polyhydroxylverbindungen und aromatische Polyaminen eingesetzt werden.

Die Herstellung von Formkörpern mit einer geschlossenen Oberflächenschicht nach dem Iso-cyanat-Polyadditionsverfahren ist grundsätzlich bekannt. Sie erfolgt z.B. durch Einführen einer reaktions- und gegebenenfalls auch schäumfähigen Mischung auf Basis von Verbindungen mit mehreren reaktionsfähigen Wasserstoffatomen und Polyisocyanaten in eine Form (vgl. z.B. die deutsche Auslegeschrift 1 196 864). Als Verbindungen mit reaktionsfähigen Wasserstoffatomen kommen dabei vor allem Hydroxylgruppen aufweisende Polyether und Polyester in Frage, während als Beispiel für Polyisocyanate 2,4- und 2,6-Toluylendiisocyanat, deren Isomerengemische sowie das durch Anilin-Formaldehyd-Kondensation und anschließende Phosgenierung erhaltene Polyphenylpolymethylenpolyisocyanat zu nennen sind. Als Treibmittel können z.B. Wasser und/oder Fluorchlorkohlenwasserstoffe dienen. Auch Katalysatoren, wie sie für die Polyurethanherstellung an sich bekannt sind, werden im allgemeinen mitverwendet.

Bei geeigneter Wahl der Ausgangskomponenten (zusätzlich können z.B. auch noch Kettenverlängerungsmittel wie Glykole oder Diamine mitverwendet werden) ist es nach dieser Verfahrensweise möglich, sowohol elastische als auch starre Produkte bzw. alle dazwischen liegenden Varianten herzustellen.

Wie bereits in der DE—OS—2 622 951 erläutert wird, können Systeme, welche Diamine als Kettenverlängerungsmittel enthalten, jedoch im allgemeinen nicht in einem one-shot-Verfahren verarbeitet werden; man muß in diesem Falle zunächst ein NCO-Gruppen enthaltendes "Präpolymeres" herstellen, welches dann in einer zweiten Stufe mit dem Diamin zum hochmolekularen Elastomeren umgesetzt wird (DE—AS—1 240 654).

Für hochbeanspruchte Formteile wählt man im allgemeinen schwach verzweigt aufgebaute Rohstoffe, die nach der Verarbeitung Materialien mit einem elastomerähnlichen Eigenschaftsbild ergeben. Derartige Formteile werden schon seit langem (z.B. in der Schuhindustrie als Sohlen) in technischem Maßstrab hergestellt. Große Formteile fanden Eingang in die Automobilindustrie.

Die Verarbeitung der Rohstoffe zu Karosserieteilen erfolgt dabei vor allem nach dem sogenannten Reaktionsspritzgußverfahren (RSG-Verfahren). Es handelt sich dabei um eine Fülltechnik, bei der die hochaktiven, flüssigen Ausgangskomponenten über Hochdruckdosieraggregate mit großer Austragsleistung nach Vermischen in sogenannten zwangsgesteuerten Mischköpfen in kürzester Zeit in die Form eingespritzt werden.

Eine eingehende Beschreibung der Reaktionsspritzgußtechnologie findet sich z.B. in den folgenden Druckschriften:

| | |
|---|---|
| Piechota/Röhr: | "Integralschaumstoffe", Carl Hanser Verlag, München/Wien, 1975; |
| Prepelka/Wharton: | "Reaction Injection Molding in the Automotive Industry", Journal of Cell. Plastics, Vol. II, No. 2, 1975; |
| Knipp: | "Plastics for Automobile Safety Bumpers", Journal of Cell. Plastics, No. 2, 1973. |

Mit Hilfe der Reaktionsspritzgußtechnik oder englisch "reaction injection moulding" (RIM) gelingt es, Großformteile von 3 bis 10 kg Gewicht und mehr herzustellen, wie sie z.B. in Form flexibler Karosserieteile von der Automobilindustrie als sogenannte "soft face"—Elemente, das sind reversibel verformbare Front- oder Heckpartien von Kraftfahrzeugen, eingesetzt werden.

Der mit dieser Arbeitsweise erzielte technische Fortschritt ist folgender:

Große Mengen zweier flüssiger, hochreaktiver Ausgangsprodukte werden innerhalb kürzester Zeit (ca. 2 bis 4 Sekunden) maschinell gefördert, dabei vermischt und in eine Form eingetragen, wo die Aushärtung zum Fertigteil wiederum innerhalb von—für Polyurethan-Werkstoffe—sehr kurzer Zeit (1 bis 2 Minuten) erfolgt.

Für die Realisierung dieser neuen Technologie waren die folgenden drei Probleme zu lösen:

1. Infolge der hohen Reaktivität der beiden Ausgangskomponenten (Polyisocyanat bzw. gegenüber Polyisocyanaten reaktive Verbindungen) muß das Reaktionsgemisch in kürzestmöglicher Zeit, die höchstens so lang sein darf wie die Startzeit, in die Form eingetragen werden. Somit bedurfte es der Entwicklung leistungsfähiger Axial- und Radialkolbenpumpen, die, in Hochdruckmaschinen eingebaut, Fördermengen von 2,5 bis 6,5 kg/sec. ermöglichen. Derartige Maschinen sind z.B. in den Deutschen Offenlegungsschriften 1 778 060 und 2 146 054 beschrieben.

2. Neben der exakten Dosierung der beiden Komponenten in einem bestimmten, von der jeweiligen Rezeptur vorgeschriebenen Verhältnis über die gesamte Dauer des "Einschießens" ist deren innige Vermischung vom ersten bis zum letzten Tropfen die Voraussetzung für ein fehlerfreies Formteil. Die Gewährleistung einer einwandfreien Vermischung wird dadurch enorm erschwert, daß infolge der hohen Strömungsgeschwindigkeiten der beiden Komponenten die Verweilzeit in der Mischkammer des Mischkopfes extrem kurz ist. Dieses Problem konnte durch Verwendung sogenannter zwangsgesteuerter Mischköpfe, die nach dem "Gegenstrominjektionsprinzip" arbeiten, gelöst werden (vgl. DE—AS—1 948 999, sowie die Deutschen Offenlegungsschriften 2 007 935, 2 219 389 und 2 364 501).

3. Beim Eintritt des Reaktionsgemisches in die geschlossene Form wird die darin enthaltene Luft fast schlagartig verdrängt. Damit es nicht zu unerwünschten Lufteinschlüssen und damit Fehlstellen beim Endprodukt kommt, muß die einströmende Flüssigkeit in Form einer "Fließfront" die Luft quasi vor sich herschieben und an vorbestimmten Entlüftungsschlitzen herausdrücken. Um somit jegliche Turbulenzen beim Füllen zu vermeiden, muß das Material auf großer Breite laminar in die Form entlang der Formenwandung eintreten. Dies wurde erreicht durch Entwicklung einer bestimmten Angußtechnik über sogenannte Filmangüsse, wie sie in den Deutschen Offenlegungsschriften 2 348 658 und 2 348 608 beschrieben wird.

In der DE—OS—2 622 951 wird beschrieben, wie man selbst extrem reaktive Systeme, also one-shot-Gemische aus aktiven Polyisocyanaten, aktiven aromatischen Polyaminen, höhermolekularen Polyhydroxylverbindungen mit primären Hydroxylgruppen und starken Katalysatoren, mit Startzeiten bis herab zu weniger als einer Sekunde, nach dieser Methode verarbeiten kann. Bei solchen Systemen erfolgt dann der Übergang der flüssigen in die feste Phase nahezu schlagartig, was dazu führt, daß das flüssige Reaktionsgemisch in der Form an deren Wandungen gleichsam erstarrt.

Nach diesem Verfahren gelingt es, voluminöse and dabei dünnwandige (<3 mm Wandstärke), komplizierte Formenhohlräume zu füllen. Offenbar zwängt sich zwischen den an den Formenwandungen erstarrten Randzonen des Formteiles noch flüssiges Material hindurch, welches unter dem Fülldruck der Maschine bis zum Ende des Füllvorgangs ständig nachgeliefert wird. Dies würde erklären, daß Formteile mit größeren Gewichten herstellbar sind, als es rein rechnerisch der Vergleich der Startzeit mit der Einfüllzeit (bei gegebener Füllmenge pro Sekunde) überhaupt zuläßt. So ist es möglich, die Einfüllzeit gegenüber der Startzeit um bis zu 50% zu überschreiten.

Die Verfestigung des gesamten Reaktionsgemisches nach Schußende erfolgt so schnell, daß bei extrem reaktiven Ansätzen bereits nach weniger als 5 Sekunden die Form geöffnet und das Teil entformt werden kann.

Ein weiterer entscheidender Vorteil dieser neuen Systeme ist die Tatsache, daß für die Entformung aus Metallwerkzeugen kein externes Trennmittel als Trennhilfe angewandt zu werden braucht, da die Endprodukte selbsttrennende Eigenschaften besitzen.

Obwohl mit den System der DE—OS—2 622 951 im Prinzip auch voluminöse Formenhohlräume gefüllt werden können, erfüllen diese Systeme des Standes der Technik noch nicht alle Anforderungen der Praxis in vollem Umfang. Wegen der extrem kurzen Start- bzw. Einfüllzeit eigen sich die Systeme des Standes der Technik noch nicht in optimaler Weise zur Herstellung von großvolumigen Formteilen, beispielsweise zur Herstellung von reversibel verformbaren Front- oder Heckpartien von Kraftfahrzeugen in der Serienfertigung, da oftmals auf ein nicht vollständiges Ausfüllen der Form zurückzuführende Fehler beobachtet werden mußten. Dies gilt insbesondere bei Verwendung der z.Z. zur Verfügung stehenden Reaktionsspritzgußmaschinen. Es wäre zwar denkbar, durch Einsatz spezieller Reaktionsspritzgußmaschinen mit einer wesentlich erhöhten Austragsleistung die genannten Nachteile der Systeme des Standes der Technik zu kompensieren; jedoch würde dies einen erheblichen Kapitaleinsatz für die maschinelle Ausrüstung erforderlich machen.

Es war die Aufgabe der vorliegenden Erfindung, die Systeme der DE—OS—2 622 951 so zu verbessern, daß eine problemlose Serienfertigung auch von großvolumigen, dünnwandigen Formteilen mit einem Gewicht von 3 bis 10 kg unter Verwendung der zur Verfügung stehenden Reaktionsspritzgußmaschinen möglich ist. Die Aufgabe der vorliegenden Erfindung bestand somit darin, die Startzeit bzw. Gießfähigkeit der genannten Systeme des Standes der Technik zu erhöhen, ohne gleichzeitig die erwünschte kurze Formstandzeit nennenswert zu beeinträchtigen.

Diese Aufgabe konnte durch die Verwendung der nachstehend näher beschriebenen erfindungswesentlichen Polyhydroxypolyether mit eingebauten Ethylenoxideinheiten und sekundären Hydroxylgruppen gelöst werden. Die erfindungsgemäße Lösung der gestellten Aufgabe ist überraschend, da zunächst erwartet werden mußte, daß die Gießzeit im wesentlichen durch die reaktivere Aminkomponente und nicht durch die Natur der Hydroxylgruppen des Polyethers bestimmt ist, und insbesondere da nicht zu erwarten war, dass nur solche Polyetherpolyole den erwünschten Effekt bringen, welche eingebaute Ethylenoxideinheiten aufweisen. Es zeigte sich überraschenderweise, daß analoge Polyetherpolyole mit einem gleichen Gehalt an sekundären Hydroxylgruppen, jedoch ohne eingebaute Ethylenoxideinheiten nicht zum gewünschten Ergebnis führen.

Die bezüglich ihrer mechanischen Eigenschaften zur Herstellung großvolumiger flexibler Karosserieteile ("soft face"-Elemente) gut geeigneten Systeme der DE—OS—2 622 951 weisen beispielsweise eine Startzeit von ca. 2 Sekunden auf und führen zu Formteilen, die nach 1 bis 2 Minuten entformt werden können. Durch Verwendung der erfindungswesentlichen Polyetherpolyole in einer ansonsten gleichartigen Rezeptur ist eine Verdoppelung der Startzeit bei unveränderter Formstandzeit möglich.

Gegenstand der vorliegenden Erfindung ist ein Verfahren zur Herstellung von gegebenenfalls zell-

**0 017 928**

förmigen, elastischen Formkörpern mit einer geschlossenen Oberflächenschicht aus Polyurethan-Polyharnstoff-Elastomeren durch Umsetzung eines Reaktionsgemisches, bestehend aus

a) organischen Polyisocyanaten,
b) Polyhydroxypolyethern des Molekulargewichtsbereichs 1000 bis 12 000,
c) aromatischen Di- bzw. Polyaminen als Kettenverlängerungsmittel,
d) Katalysatoren für die Reaktion zwischen Hydroxylund Isocyanatgruppen und
e) gegebenenfalls den in der Polyurethanchemie an sich bekannten Treib-, Hilfs- und Zusatzmitteln,

wobei das Reaktionsgemisch als one-shot-System nach der Reaktionsspritzgußtechnik verarbeitet wird und wobei die Reaktionspartner in einer Isocyanatkennzahl von 70 bis 130 entsprechenden Mengen zum Einsatz gelangen, dadurch gekennzeichnet, daß man als Komponente b) Polyhydroxypolyether verwendet, deren Polyetherketten zu 10 bis 10 Gew.-% aus Ethylenoxid-Einheiten bestehen, und deren Hydroxylgruppen zu mindestens 50% aus sekundären Hydroxylgruppen bestehen.

Als erfindungsgemäß einzusetzende Ausgangskomponenten a) kommen aliphatische, cycloaliphatische, araliphatische, aromatische und heterocyclische Polyisocyanate in Betracht, wie sie z.B. von W. Siefken in Justus Liebigs Annalen der Chemie, 562, Seiten 75 bis 136, beschrieben werden, beispielsweise Ethylen-diisocyanat, 1,4-Tetramethylendiisocyaa-t, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE—AS—1 202 785, amerikanische Patentschrift 3 401 190), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethan-diisocyanat, 1,3-und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4''-triisocyanat, Polyphenyl-polymethylen-polyisocyanate, wie sie durch Anilin-Formaldehyd-Kondensation und anschließende Phosgenierung erhalten und z.B. in den britischen Patentschriften 874 430 und 848 671 beschrieben werden, m- und p-Isocyanatophenylsulfonyl-isocyanate gemäß der amerikanischen Patentschrift 3 4546606, perchlorierte Arylpolyisocyanate, wie sie z.B. in der deutschen Auslegeschrift 1 157 601 (amerikanische Patentschrift 3 277 138) beschrieben werden, Carbodiimidgruppen aufweisende Polyisocyanate, wie sie in der deutschen Patentschrift 1 092 007 (amerikanische Patentschrift 3 152 162) beschrieben werden, Diisocyanate, wie sie in der amerikanischen Patentschrift 3 492 330 beschrieben werden, Allophanatgruppen aufweisende Polyisocyanate, wie sie z.B. in der britischen Patentschrift 994 890, der belgischen Patentschrift 761 626 und der veröffentlichten holländischen Patentanmeldung 7 102 524 beschrieben werden, Isocyanuratgruppen aufweisende Polyisocyanate, wie sie z.B. in der amerikanischen Patentschrift 3 001 973, in den deutschen Patentschriften 1 022 789, 1 222 067 und 1 027 394 sowie in den deutschen Offenlegungsschriften 1 929 034 und 2 004 048 beschrieben werden, Urethangruppen aufweisende Polyisocyanate, wie sie z.B. in der belgischen Patentschrift 752 261 oder in der amerikanischen Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z.B. in der deutschen Patentschrift 1 101 394 (amerikanische Patentschriften 3 124 605 und 3 201 372) sowie in der britischen Patentschrift 889 050 beschrieben werden, durch Telomerisationsreaktionen hergestellte Polyisocyanate, wie sie z.B. in der amerikanischen Patentschrift 3 654 106 beschrieben werden, Estergruppen aufweisende Polyisocyanate, wie sie z.B. in den britischen Patentschriften 965 474 und 1 072 956, in der amerikanischen Patentschrift 3 567 763 und in der deutschen Patentschrift 1 231 688 genannt werden, Umsetzungsprodukte der oben-genannten Isocyanate mit Acetalen gemäß der deutschen Patentschrift 1 072 385 und polymere Fettsäurereste enthaltende Polyisocyanate gemäß der amerikanischen Patentschrift 3 455 883.

Vorzugsweise werden als Komponente a) bei der Verarbeitungstemperatur flüssige aromatische Polyisocyanate eingesetzt. Zu den besonders bevorzugten Ausgangsmaterialien a) gehören bei Raumtemperatur flüssige Derivate des 4,4'-Diisocyanatodiphenylmethans, beispielsweise flüssige, Urethangruppen aufweisende Polyisocyanate, wie sie gemäß DE—PS—1 618 380 (US—PS—3 644 457) durch Umsetzung von 1 Mol 4,4'-Diisocyanatodiphenylmethan mit 0,05 bis 0,3 Molen an niedermolekularen Diolen oder Triolen, vorzugsweise Polypropylenglykolen mit einem Molekulargewicht unter 700, zugänglich sind, oder Carbodiimid- und/oder Uretonimingruppen enthaltende Diisocyanate auf Basis von Diphenylmethan-diisocyanat, wie sie beispielsweise gemäß der deutschen Patentschrift 1 092 007 (US—Patentschrift 3 152 162) zugänglich sind. Mischungen der letztgenannten bevorzugten Polyisocyanate werden ebenfalls bevorzugt eingesetzt, Aliphatische und cycloaliphatische Isocyanate sind erfindungsgemäß im allgemeinen weniger geeignet.

Bei der Komponente b) handelt es sich um Polyhydroxypolyether eines mittleren, beispielsweise aus dem Hydroxylgehalt und der mittleren Funktionalität errechenbaren, Molekulargewichts von 1000 bis 12 000, vorzugsweise 2000 bis 8000, deren Polyetherketten zu 10 bis 80 Gew.-%, vorzugsweise 30 bis 60 Gew.-%, aus Ethylenoxideinheiten bestehen, und deren Hydroxylgruppen zu mindestens 50%, vorzugsweise mindestens 90, im allgemeinen bis ca. 100% aus sekundären Hydroxylgruppen

4

bestehen. Die Polyetherketten weisen neben Ethylenoxideinheiten vorzugsweise Propylenoxid-einheiten auf. Der Gehalt an eingebauten Ethylenoxid-Einheiten kann beispielsweise durch NMR-Analyse bestimmt werden, während der Gehalt an sekundären Hydroxylgruppen nach Acetylierung ebenfalls nach bekannten Methoden der NMR-Analyse ermittelt werden kann.

Die Herstellung der efindungswesentlichen Polyhydroxypolyether erfolgt in an sich bekannter Weise durch Alkoxylierung geeigneter Startermoleküle, wobei die Ethylenoxid-Einheiten durch Anlagerung von Ethylenoxid oder von Gemischen aus Ethylenoxid mit anderen Epoxiden, vorzugsweise Propylenoxid erfolgt, und wobei die sekundären Hydroxylgruppen vorzugsweise durch Anlagerung von Propylenoxid am Kettenende eingebaut werden. Grundsätzlich können bei der Herstellung der erfindungswesentlichen Polyhydroxypolyether auch andere Epoxide als die genannten mitverwendet werden, vorausgesetzt, daß die Polyhydroxypolyether der obengenannten Definition entsprechen. Geeignete Starterkomponenten sind die üblichen, aktive Wasserstoffatome aufweisenden niedermolekularen Verbindungen wie z.B. Wasser Alkohole, Ammoniak oder Amine, z.B. Ethylenglykol, Propylenglyol-(1,3) oder -(1,2), Trimethylolpropan, 4,4'-Dihydroxy-diphenylpropan, Anilin, Ethanolamin oder Ethylendiamin. Auch Sucrosepolyether, wie sie z.B. in den deutschen Auslegeschriften 1 176 358 und 1 064 938 beschrieben werden, kommen erfindungsgemäß in Frage, wobei allerdings beachtet werden sollte, daß die erfindungswesentlichen Polyhydroxypolyether vorzugsweise eine mittlere OH-Funktionalität von 2 bis 4 aufweisen.

Grundsätzlich ist es auch möglich, solche, der obigen Definition, entsprechende Polyether einzusetzen, die nachträglich in an sich bekannter Weise modifiziert worden sind. Zu diesen modifizierten Polyethern gehören beispielsweise durch Vinylpolymerisate modifizierte Polyether, wie sie z.B. durch Polymerisation von Styrol und Acrylnitril in Gegenwart von Polyethern entstehen (amerikanische Patentschriften 3 383 351, 3 304 273, 3 523 093, 3 110 695, deutsche Patentschrift 1 152 536 oder Polyhydroxylverbindungen, in welchen hochmolekulare Polyaddukte bzw. Polykondensate in feindisperser oder gelöster Form enthalten sind. Derartige modifizierte Polyhydroxylverbindungen werden erhalten, wenn man Polyadditionsreaktionen (z.D. Umsetzungen zwischen Polyisocyanaten und aminofunktionellen Verbindungen) bzw. Polykondensationsreaktionen (z.B. zwischen Formaldehyd und Phenolen und/oder Aminen) direkt in situ in den obengenannten, Hydroxylgruppen aufweisenden Verbindungen ablaufen läßt. Derartige Verfahren sind beispielsweise in den Deutschen Auslegeschriften 1 168 075 und 1 260 142, sowie den Deutschen Offenlegungsschriften 2 324 134, 2 423 984, 2 512 385, 2 513 815, 2 550 796, 2 550 797, 2 550 833 und 2 550 862 beschrieben. Es ist aber auch möglich, gemäß US—Patent 3 869 413 bzw. Deutscher Offenlegungsschrift 2 550 860 eine fertige wäßrige Polymerdispersion mit einer Polyhydroxylverbindung zu vermischen und anschließend aus dem Gemisch das Wasser zu entfernen.

Das Kettenverlängerungsmittel c) besteht aus beliebigen aktiven, vorzugsweise flüssigen oder in der Polyolkomponente gelösten aromatischen Di- bzw. Polyaminen. Unter "aktiven" Di- bzw. Polyaminen sind dabei solche zu verstehen, deren Reaktivität gegenüber Isocyanaten nicht durch elektronenanziehende Substituenten wie z.B. Halogen, Ester-, Ether- oder Disulfidgruppen herabgesetzt ist, wie es z.B. beim Methylen-bis-chloranilin (Moca) der Fall ist.

Das Kettenverlängerungsmittel c) kommt beim erfindungsgemäßen Verfahren vorzugsweise in Mengen von 5 bis 50 Gew.-%, besonders bevorzugt 8 bis 35 Gew.-%, bezogen auf Komponente b), zum Einsatz.

Aromatische Amine, die allein oder im Gemisch als Kettenverlängerungsmittel c) verwendet werden können, sind z.B. 2,4- und 2,6-Diaminotoluol, 2,4'- und/oder 4,4'-Diaminodiphenylmethan, 1,2-, 1,3- und 1,4-Phenylendiamin, Naphthylen-1,5-diamin und Triphenyl-methan-4,4',4''-triamin. Die di- bzw. polyfunktionellen aromatischen Aminverbindungen können auch ausschließlich bzw. teilweise sekundäre Aminogruppen enthalten wie z.B. 4,4'-Di-(Methylamino)-diphenylmethan oder 1-Methyl-2-methylamino-4-aminobenzol. Flüssige Mischungen von Polyphenyl-polymethylen-polyaminen, wie sie durch Anilin-Formaldehyd-Kondensation erhalten werden, sind ebenfalls geeignet.

Als für das erfindungsgemäße Verfahren besonders geeignet haben sich alle flüssigen oder gelösten aromatischen Diamine erwiesen, die in o-Stellung zur ersten Aminogruppe mindestens einen Alkylsubstituenten und in o-Stellung zur zweiten Aminogruppe zwei Alkylsubstituenten mit 1 bis 3 Kohlenstoffatomen besitzen. Dazu gehören z.B. 1,3-Diethyl-2,4-diaminobenzol, 2,4-Diaminomesitylen, 1-Methyl-3,5-diethyl-2,4-diaminobenzol, 1-Methyl-3,5-diethyl-2,6-diaminobenzol, 1,3,5-Triethyl-2,6-diaminobenzol, 3,5,3',5'-Tetraethyl-4,4'-diaminodiphenylmethan oder 3,5,3',5'-Tetraisopropyl-4,4'-diaminodiphenylmethan.

Selbstverständlich können die genannten aromatischen Diamine auch im Gemisch angewendet werden, darüber hinaus auch in Kombination mit anderen aktiven aromatischen Diaminen.

Erfindungswesentlich ist ferner die Mitverwendung geeigneter Katalysatoren für die Reaktion zwischen den Isocyanatgruppen und den Hydroxylgruppen, da ohne ihre Mitverwendung kein Formteil mit kurzer Formstandzeit und technisch interessanten mechanischen Eigenschaften erhalten werden kann. Geeignete Katalysatoren sind beispielsweise die in der DE—OS—2 622 951 genannten. Vorzugsweise werden organische Metall-Katalysatoren, insbesondere organische Zinn-Katalysatoren, der an sich bekannten Art eingesetzt. Zu den besonders bevorzugten Katalysatoren gehören solche organische Zinnverbindungen, die keine sauren Reste abspalten können. Dazu gehören beispielsweise

5

Dibutylzinn (IV)-dilaurylmercaptid, Dioctylzinn (IV)-dilaurylmercaptid, Zinn(II)-dilaurylmercaptid und Dibutylzinndiacetylacetonat. Mit den zuletzt genannten wird vorteilhafterweise eine weitere Verlängerung der Gießzeit erreicht. Dabei ist besonders überraschend und für den Fachmann eigentlich kaum verständlich, daß mit einer Erhöhung der Katalysatorkonzentration längere Gießzeiten erzielt werden.

Die Katalysatoren werden in der Regel in einer Menge zwischen etwa 0,001 und 10 Gew.-%, vorzugsweise 0,05 bis 2 Gew.-%, bezogen auf die Menge an Verbindungen b), eingesetzt.

Nach dem erfindungsgemäßen Verfahren werden vorzugsweise kompakte Formteile hergestellt, jedoch können auch Treibmittel eingesetzt werden, wobei dann Formteile mit einer geschlossenen Oberfläche und einem zelligen Inneren erhalten werden. So können als Treibmittel e) Wasser und/oder leicht flüchtige organische Substanzen verwendet werden. Als organisch Treibmittel kommen z.B. Aceton, Ethylacetat, Methanol, Ethanol, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether in Frage.

Eine Treibwerkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl Hanser Verlag, München 1966, z.B. auf den Seiten 108 und 109, 453 bis 455 und 507 bis 510, beschrieben.

Erfindungsgemäß können auch oberflächenaktive Zusatzstoffe (Emulgatoren und Schaumstabilisatoren) mitverwendet werden. Als Emulgatoren kommen z.B. die Natriumsalze von Ricinusölsulfonaten oder auch von Fettsäuren oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder auch von Fettsäuren wie Ricinolsäure oder von polymeren Fettsäuren können als oberflächenaktive Zusatzstoffe mitverwendet werden.

Als Schaumstabilisatoren kommen vor allem wasserlösliche Polyethersiloxane in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in der amerikanischen Patentschrift 2 764 565 beschrieben.

Erfindungsgemäß können ferner auch Zellregler der an sich bekannten Art wie Paraffine oder Fettalkohole und Flammschutzmittel der an sich bekannten Art, z.B. Trischlorethylphosphat oder Ammoniumphosphat und -polyphosphat, ferner Stabilisatoren gegen Alterungs- und Witterungseinflüsse, Weichmacher und fungistatisch und bakteriostatisch wirkende Substanzen, sowie Füllstoffe wie Bariumsulfat, Kieselgur, Ruß oder Schlämmkreide mitverwendet werden.

Weitere Beispiele von gegebenenfalls erfindungsgemäß mitzuverwendenden oberflächenaktiven Zusatzstoffen und Schaumstabilisatoren sowie Zellreglern, Stabilisatoren, flammhemmenden Substanzen, Weichmachern, Farbstoffen und Füllstoffen, fungistatisch und bakteriostatisch wirksamen Substanzen sowie Einzelheiten über Verwendungs- und Wirkungsweise dieser Zusatzmittel sind im Kunststoff-Handbuch, Band VI, herausgegeben von Vieweg und Höchtlen, Carl Hanser Verlag, München 1966, z.B. auf den Seiten 103 bis 113 beschrieben. ·

Beim erfindungsgemäßen Verfahren wird die Polyisocyanatmenge (Komponente a)) so bemessen, daß im schaumfähigen Gemisch eine Isocyanat-Kennzahl von 70 bis 130, insbesondere 90 bis 110, vorliegt. Unter Isocyanat-Kennzahl versteht man hierbei den Quotienten aus Anzahl der Isocyanatgruppen und Anzahl der gegenüber Isocyanaten reaktiven Gruppen, multipliziert mit 100.

Bei der Durchführung des erfindungsgemäßen Verfahrens wird nach der bekannten Reaktionsspritzguß-Technik (RSG-Verfahren) gearbeitet. Die Menge des in die Form eingebrachten, gegebenenfalls schaumfähigen Gemisches wird im übrigen so bemessen, daß der Formkörper eine Dichte von 0,8 bis 1,2 $g/cm^3$, vorzugsweise von 0,9 bis 1,1 $g/cm^3$, aufweist.

Als Ausgangstemperatur des in die Form eingebrachten Gemisches wird eine Temperatur zwischen 10 und 50°C, vorzugsweise 20 bis 30°C, gewählt. Die Temperatur der Form beträgt 40 bis 100°C, vorzugsweise 50 bis 70°C.

Obwohl die sehr schnelle Reaktion zwischen den Komponenten a) bis e) z.B. für die Entformung aus polierten Metallwerkzeugen eine Anwendung von Trennmitteln überflüssig macht, können zusätzlich die bekannten Trennmittel auf Wachs- oder Siliconbasis eingesetzt werden. Weiterhin können bei der Durchführung des erfindungsgemäßen Verfahrens die inneren Formtrennmittel des Standes der Technik, wie sie beispielsweise in den deutschen Offenlegungsschriften 1 953 637 bzw. 2 121 670 beschrieben sind, mitverwendet werden.

Die nach dem erfindungsgemäßen Verfahren erhältlichen Formkörper eignen sich insbesondere zur Herstellung von flexiblen Automobil-Stoßstangen bzw. -Karosserieelementen. Durch geeignete Variation der Ausgangsverbindungen a) bis e), insbesondere bei relativ geringem Anteil an Diamin c), können aber z.B. auch flexible Polyurethan-Schuhsohlen mit gutem Abriebverhalten und ausgezeichneter mechanischer Festigkeit erhalten werden.

Beispiele 1—5

Die Verarbeitung der in den Beispielen 1 bis 5 beschriebenen Rezepturen erfolgte mit Verdüsungsmaschinen, die nach dem Prinzip der Gegenstrominjektion arbeiten (HK-Maschinen (Maschinenfabrik Hennecke GmbH, 5205 St. Augustin 1, BRD mit zwangsgesteuertem Mischkopf; RSG-Verfahren). In einem vernickelten Stahlwerkzeug wurden Formteile ("convette rearend") von 5,1 kg Gewicht und 3 mm Wandstärke hergestellt. Das Füllen des in einer Schließeinheit fixierten Stahlwerkzeugs erfolgte von der Längsseite über einen Stangenanguß.

Die Erfindung ist nicht auf die genannten Maschinen beschränkt, jedoch müssen die verwendeten Mischvorrichtungen eine hohe Austragsleistung (>0,5 kg/sec., vorzugsweise >1 kg/sec.) für die Herstellung derart großflächiger dünnwandiger Formteile vom Typ des genannten Karosserieteils aufweisen, um die flüssige Reaktionsmischung in kürzester Zeit in das Werkzeug einzutragen.

Beispiel 1 (Vergleich)

77,00 Gew.-Teile eines Polyethers der OH-Zahl 28, der durch Addition von Propylenoxid und anschließende Addition von Ethylenoxid an Trimethylolpropan erhalten wurde (ÄOX-Endblock) mit überwiegend primären Hydroxylgruppen;

23,00 Gew.-Teile einer Mischung aus 65 Gew.-Teilen 1-Methyl-3,5-diethyl-phenylendiamin-(2,4) und 35 Gew.-Teilen 1-Methyl-3,5-diethyl-phenylendiamin-(2,6) und

0,10 Gew.-Teile eines Komplexes aus 1 Mol Dibutylzinndilaurat und 1 Mol 2,3-Dimethyl-3,4,5,6-tetrahydropyrimidin

werden zu einer Polyolkomponente vereinigt und mit 55,00 Gew.-Teilen eines Umsetzungsproduktes aus Tripropylenglykol und 4,4'-Diphenylmethandiisocyanat (23 Gew.-% NCO) nach dem RSG-Verfahren verarbeitet.

Die Temperatur der Rohstoffe beträgt 40°C, die Werkzeugtemperatur 55°C. Die Formstandzeit liegt bei 1 bis 2 Minuten, Entformung nach kürzerer Zeit ist möglich.

Selbst bei maximaler Austragsleistung der Maschine (2370 g/sec.) kann das Werkzeug nicht 100 %ig gefüllt werden. Die extrem kurze Gießzeit (1—2 sec.) führt zu einer Erhöhung des Formeninnendrucks, Aufblähen der Form und dadurch bewirkte ungleiche Formteilwandstärke, sowie Austritt von Reaktionsgemisch am Anguß.

Das erhaltene Polyurethan-Polyharnstoff-Elastomer wird bei 120°C 1 Stunde getempert. Am Formteil werden die folgenden mechanischen Werte ermittelt:

| | |
|---|---|
| Rohdichte (kg/m³) (DIN 53420) | 1101 |
| Zugfestigkeit (MPa) (DIN 53504) | 29,2 |
| Bruchdehnung (%) (DIN 53504) | 341 |
| Weiterreißfestigkeit (kN/m) mit Schnitt (DIN 53515) | 75 |
| E-Modul (MPa)+65°C | 269 |
| (n. Roelig) RT | 427 |
| —30°C | 924 |
| Biegemodul (MPa) RT (ASTM-D 790—71) | 361 |

Beispiel 2

77,00 Gew-Teile eines Polyethers der OH-Zahl 28, der durch Addition einer Mischung von Propylenoxid und Ethylenoxid sowie anschließende Addition von Propylenoxid an Propylenglykol erhalten wurde (PO-Endblock) mit einem Gehalt von ca. 40 Gew.-% an Ethylenoxideinheiten, bezogen auf Gesamtmenge an Alkylenoxideinheiten, an Ethylenoxid und mit mehr als 95% sekundären Hydroxylgruppen,

23,00 Gew.-Teile einer Mischung aus 65 Gew.-Teilen 1-Methyl-3,5-diethyl-phenylendiamin-(2,4) und 35 Gew.-teilen 1-Methyl-3,5-diethyl-phenylendiamin-(2,6) und

0,50 Gew.-Teile Di-n-butylzinn-di-lauryl-mercaptid

werden zu einer Polyolkomponente vereinigt und mit 55,00 Gew.-Teilen eines Umsetzungsproduktes aus Tripropylenglykol und 4,4'-Diphenylmethandiisocyanat (23 Gew.-% NCO) nach dem RSG-Verfahren verarbeitet. Verarbeitungstemperaturen und Formstandzeit werden wie in Beispiel 1 gewählt.

Bei einer Austragsleistung von 1500 g/sec. (Füllzeit 6,7 sec.) kann im Gegensatz zu Beispiel 1 hier eine einwandfreie Füllung des Werkzeugs erreicht werden. Das erhaltene Polyurethan-Polyharnstoff-Elastomer wird bei 120°C 1 Stunde getempert. Am Formteil werden die folgenden mechanischen Werte ermittelt:

| | |
|---|---|
| Rohdichte (kg/m³) (DIN 53420) | 1116 |
| Zugfestigkeit (MPa) (DIN 53504) | 32,8 |
| Bruchdehnung (%) (DIN 53504) | 397 |
| Weiterreißfestigkeit (kN/m) mit Schnitt (DIN 53515) | 111 |

| | |
|---|---|
| E-Modul (MPa)+65°C | 172 |
| (n. Roelig) RT | 1260 |
| —30°C | 1260 |
| Biegemodul (MPa) (ASTM-D 790—71) | 185 |

Beispiel 3

77,00 Gew.-Teile eines Polyethers der OH-Zahl 56, der durch Addition einer Mischung von Propylenoxid und Ethylenoxid sowie anschließende Addition von Propylenoxid an Propylenglykol erhalten wurde (PO-Endblock) mit einem Gehalt von ca. 50 Gew.-%, bezogen auf Gesamtmenge an Alkylenoxideinheiten, an Ethylenoxid und mit mehr als 95% sekundären Hydroxylgruppen,

23,00 Gew.-Teile einer Mischung aus 65 Gew.-Teilen 1-Methyl-3,5-diethyl-phenylendiamin-2,4 und 35 Gew.-Teilen 1-Methyl-3,5-diethyl-phenylendiamin-(2,6) und

0,50 Gew.-Teile Di-n-butyl-di-lauryl-mercaptid

werden zu einer Polyolkomponente vereinigt und mit 63,00 Gew.-Teilen eines Umsetzungsproduktes aus Tripropylenglykol und 4,4'-Diphenylmethandiisocyanat (23 Gew.-% NCO) nach dem RSG-Verfahren verarbeitet. Verarbeitungstemperaturen und Formstandzeit werden wie in Beispiel 1 gewählt.

Bei einer Austragsleistung von 1700 g/sec. (Füllzeit 3,2 sec.) kann einwandfreie Füllung des Werkzeugs erreicht werden. Das erhaltene Polyurethan-Polyharnstoff-Elastomer wird bei 120°C 1 Stunde getempert.

Am Formteil werden die folgenden mechanischen Werte ermittelt:

| | |
|---|---|
| Rohdichte (kg/m³) (DIN 53420) | 1127 |
| Zugfestigkeit (MPa) (DIN 53504) | 41,0 |
| Bruchdehnung (%) (DIN 53504) | 380 |
| Weiterreißfestigkeit (kN/m) (DIN 53515) | 100 |
| E-Modul (MPa)+65°C | 158 |
| (n Roelig) RT | 351 |
| —30°C | 2070 |
| Biegemodul (Pa) (ASTM-D 790—71) | 185 |

Beispiel 4

77,00 Gew.-Teile eines Polyethers der OH-Zahl 56, der durch Addition einer Mischung von Propylenoxid und Ethylenoxid an Glycerin erhalten wurde, mit einem Gehalt von ca. 50 Gew.-%, bezogen auf Gesamtmenge an Alkylenoxideinheiten, an Ethylenoxid und mit mehr als 95% sekundären Hydroxylgruppen;

23,00 Gew.-Teile einer Mischung aus 65 Gew.-Teilen 1-Methyl-3,5-diethyl-phenylendiamin-2,4 und 35 Gew.-Teilen 1-Methyl-3,5-diethyl-phenylendiamin-(2,6) und

0,50 Gew.-Teilen Di-n-butyl-di-lauryl-mercaptid

werden zu einer Polyolkomponente vereinigt und mit 63,00 Gew.-Teilen eines Umsetzungsproduktes aus Tripropylenglykol und 4,4'-Diphenylmethandiisocyanat (23 Gew.-% NCO) nach dem RSG-Verfahren verarbeitet. Verarbeitungstemperaturen und Formstandzeit werden wie in Beispiel 1 gewählt. Bei einer Austragsleistung von 2340 g/sec. (Füllzeit 2,5 sec.) kann einwandfreie Füllung des Werkzeuges erreicht werden. Das erhaltene Polyurethan-Polyharnstoff-Elastomer wird bei 120°C 1 Stunde getempert. Am Formteil werden die folgenden mechanischen Werte ermittelt:

| | |
|---|---|
| Rohdichte (kg/m³) (DIN 53420) | 1102 |
| Zugfestigkeit (MPa) (DIN 53504) | 31,2 |
| Bruchdehnung (%) (DIN 53504) | 228 |
| Weiterreißfestigkeit (kN/m) mit Schnitt (DIN 53515) | 46 |
| Biegemodul (MPa) (ASTM-D 790—71) | 158 |

Beispiel 5

77,00 Gew.-Teile eines Polyethers der OH-Zahl 26, der durch Addition einer Mischung von Propylenoxid und Ethylenoxid sowie anschließende Addition von Propylenoxid an Glycerin erhalten wurde (PO-Endblock) mit einem Gehalt an 30 Gew.-%, bezogen auf Gesamtmenge an Alkylenoxid, an Ethylenoxid und mit mehr als 95% sekundären Hydroxylgruppen,

23,00 Gew.-Teile einer Mischung aus 80 Gew.-Teilen 1-Methyl-3,5-diethyl-phenylendiamin-(2,4) und 20 Gew.-Teilen 1-Methyl-3,5-diethyl-phenylendiamin-(2,6) und

0,30 Gew.-Teile Di-n-butyl-di-lauryl-mercaptid

werden zu einer Polyolkomponente vereinigt und mit 46,00 Gew.-Teilen eines Prepolymeren mit einem NCO-Gehalt von 26 Gew.-% nach dem RSG-Verfahren verarbeitet. Bei dem Prepolymeren handelt es sich um ein Umsetzungsprodukt von überschüssigen Mengen eines durch teilweise Carbodiimidisierung verflüssigten 4,4'-Diisocyanatodiphenylmethans mit Polypropylenglykol des mittleren Molekulargewichts 2000. Bei einer Austragsleistung von 1500 g/sec. (Füllzeit 3,7 sec.) kann eine einwandfreie Füllung des Werkzeugs erreicht werden. Verarbeitungstemperaturen und Formstandzeit werden wie in Beispiel 1 gewählt. Das erhaltene Polyurethan-Polyharnstoff-Elastomer wird bei 120°C 1 Stunde getempert. Am Formteil werden die folgenden mechanischen Werte ermittelt:

| | |
|---|---|
| Rohdichte (kg/m³) (DIN 53420) | 1016 |
| Zugfestigkeit (MPa) (DIN 53504) | 22,8 |
| Bruchdehnung (%) (DIN 53504) | 250 |
| Weiterreißfestigkeit (kN/m) mit Schnitt (DIN 53515) | 81 |
| Biegemodul (MPa) (ASTM-D 790—71) | 160 |

Beispiele 6—13

Die in den nachstehenden Beispielen 6—13 beschriebenen Versuche wurden unter Laborverschäumungsbedingungen durchgeführt. Nach Vereinigung aller Mischungskomponenten wurde das Reaktivgemisch mit einem Laborrührer durchgerührt und anschließend in eine geschlossene, temperierte, senkrecht aufgestellte Metallform eingefüllt. Die inneren Abmessungen dieser Form betragen 200×200×20 mm. Die Temperatur der Form liegt bei 65°C. Die Form wurde jeweils nach 5 Minuten geöffnet und das Material nach dem Grad der Ausfüllung der Form und dem Verlaufen in der Form begutachtet.

Beispiel 6

100 Gew.-Teile eines Polyetherdiols des Molekulargewichts 2000, welches durch Ethoxylierung von Propylenglykol und anschließendem Aufpropfen von Propylenoxid erhalten worden war, und welches 50% eingebaute Ethylenoxideinheiten aufweist, und dessen Hydroxylgruppen zu weniger als 5% primäre Hydroxylgruppen darstellen, werden mit 10 Gew.-Teilen des bereits in Beispielen 1 bis 4 verwendeten Diamin-Isomerengemisches, 1 Gew.-Teil Dibutylzinn(IV)dilaurat, 39,8 Gew.-Teilen des in Beispiel 1 verwendeten Diisocyanats und 10 Gew.-Teile Monochlortrichlormethan vermischt und in das oben beschriebene Plattenwerkzeug eingefüllt. Nach 5 Minuten wird das Werkzeug geöffnet. Das Reaktionsgemisch war in der Form einwandfrei verlaufen. Das ausgehärtete Polymermaterial füllt ca. 70% des Formhohlraums aus. Die eingefüllte Menge betrug bei diesem Versuch 253 g.

Beispiel 7

100 Gew.-Teile des in Beispiel 6 beschriebenen Polyetherdiols werden mit 10 Gew.-Teilen des in Beispiel 6 Diamin-Isomerengemischs, 1 Gew.-Teil Dibutylzinn(IV)dilaurylmercaptid, 39,8 Gew.-Teilen des in Beispiel 1 verwendeten Diisocyanats mit 10 Gew.-Teilen Monofluortrichlormethan vermischt und in das beschriebene Plattenwerkzeug eingefüllt. Die Form wird nach 5 Minuten geöffnet. Der Formhohlraum ist zu 100% ausgefüllt. Das Gewicht der Füllung beträgt 255 g.

Beispiel 8 (Vergleich)

100 Gew.-Teile des Polyetherdiols aus Beispiel 1 werden mit 10 Gew.-Teilen des Diamin-Isomerengemischs aus Beispiel 1, 1 Gew.-Teil Dibutylzinndilaurat, 29,8 Gew.-Teilen des in Beispiel 1 beschriebenen Diisocyanats und 10 Gew.-Teilen Monofluortrichlormethan vermischt. Da das Reaktionsgemisch unmittelbar nach Kontakt mit der heißen Formoberfläche erstarrt, können lediglich 140 g Material eingefüllt werden. Das fertige Polymer füllt die Form zwar zu ca. 50% aus, das Reaktionsgemisch verläuft aber nicht mehr in ihr.

Beispiel 9 (Vergleich)

100 Gew.-Teile eines Polypropylenglykols des Molekulargewichts 2000 werden mit 10 Gew.-Teilen des Diamin-Isomerengemischs aus Beispiel 1, 1 Gew.-Teil Dibutylzinndilaurat, 39,4 Gew.-Teilen des Diisocyanats aus Beispiel 1 und 10 Gew.-Teilen Monofluortrichlormethan vermischt. Aus dem in Beispiel 8 genannten Grund können nur 130 g des Reaktionsgemischs in das Plattenwerkzeug eingefüllt werden. Die Form ist nach Aushärten des Gemischs zu ca. 40% ausgefüllt.

Beispiel 10

100 Gew.-Teile des in Beispiel 6 verwendeten Polyetherdiols, 15 Gew.-Teile des Diamin-Isomerengemischs aus Beispiel 1, 1 Gew.-Teil Dibutylzinndilaurylmercaptid, 49,6 Gew.-Teile des in Beispiel 1 verwendeten Diisocyanats und 10 Gew.-Teile Monofluortrichlormethan werden vermischt und in das Plattenwerkzeug eingefüllt. Nach 5 Minuten wird das Werkzeug geöffnet. Das ausgehärtete Polymermaterial füllt die Form vollständig aus. Die Dichte des Materials beträgt 0,675 g/cm³, seine Härte Shore A 72.

Beispiel 11

Beispiel 10 wird wiederholt mit der Abänderung, daß anstelle von 15 Gew.-Teilen Diamin-

9

Isomerengemisch 8 Gew.-Teile Toluylendiamin eingesetzt werden und anstelle von 49,6 Gew.-Teilen des in Beispiel 1 verwendeten Diisocyanats 43 Gew.-Teile. Nach 5 Minuten wird das Werkzeug geöffnet. Das ausgehärtete Polymermaterial füllt die Form vollständig aus. Die Dichte des Materials beträgt 0,575 g/cm$^3$.

Beispiel 12

Beispiel 10 wird wiederholt mit der Abänderung, daß anstelle von 15 Gew.-Teilen Diamin-Isomerengemisch 6 Gew.-Teile o-Phenylendiamin und anstelle von 49,6 Gew.-Teilen des Diisocyanats lediglich 39,4 Gew.-Teile eingesetzt werden. Das Werkzeug wird nach 5 Minuten geöffnet. Das ausgehärtete Polymermaterial füllt die Form vollständig aus. Die Dichte des Materials liegt bei 0,71 g/cm$^3$, seine Härte vor Shore A bei 44.

Beispiel 13

200 Gew.-Teile des in Beispiel 6 verwendeten Polyetherdiols werden mit 16 Gew.-Teilen des in Beispiel 1 verwendeten Diamin-Isomerengemischs und 70,5 Gew.-Teilen des in Beispiel 1 verwendeten Diisocyanats zu einem Elastomer verarbeitet, wobei die Gießzeit des Reaktionsgemischs in Abhängigkeit von der eingesetzten Menge an Dibutylzinndilaurylmercaptid bestimmt wird.

| Dibutylzinndilaurylmercaptid (Gew.-Teile) | Gießzeit (sec) |
|---|---|
| 0,5 | 9 |
| 1,0 | 11 |
| 2,0 | 17 |

**Patentansprüche**

1) Verfahren zur Herstellung von gegebenenfalls zellförmigen, elastischen Formkörpern mit einer geschlossenen Oberflächenschicht aus Polyurethan-Polyharnstoff-Elastomeren durch Umsetzung eines Reaktionsgemisches, bestehend aus

a) organischen Polyisocyanaten,
b) Polyhydroxypolyethern des Molekulargewichtsbereichs 1000 bis 12 000,
c) aromatischen Di- bzw. Polyaminen als Kettenverlängerungsmittel,
d) Katalysatoren für die Reaktion zwischen Hydroxylund Isocyanatgruppen und
e) gegebenenfalls den in der Polyurethanchemie an sich bekannten Treib-, Hilfs- und Zusatzmitteln,

wobei das Reaktionsgemisch als one-shot-System nach der Reaktionsspritzgußtechnik verarbeitet wird und wobei die Reaktionspartner in einer Isocyanatkennzahl von 70 bis 130 entsprechenden Mengen zum Einsatz gelangen, dadurch gekennzeichnet, daß man als Komponente b) Polyhydroxypolyether verwendet, deren Polyetherketten zu 10 bis 80 Gew.-% aus Ethylenoxid-Einheiten bestehen, und deren Hydroxylgruppen zu mindestens 50% aus sekundären Hydroxylgruppen bestehen.

2. Verfahren gemäß Anspruch 1, dadurch gekennzeichnet, daß man als Komponente a) aromatische bei der Verarbeitungstemperatur flüssige Polyisocyanate verwendet.

3. Verfahren gemäß Anspruch 1 und 2, dadurch gekennzeichnet, daß man die Komponente c) in Mengen von 5 bis 50 Gew.-%, bezogen auf Komponente b), verwendet.

4. Verfahren gemäß Anspruch 1 bis 3, dadurch gekennzeichnet, daß man also Komponente c) aromatische Diamine verwendet, die in ortho-Stellung zur ersten Aminogruppe mindestens einen Alkylsubstituenten und in ortho-Stellung zur zweiten Aminogruppe 2 Alkylsubstituenten mit jeweils 1 bis 3 Kohlenstoffatomen aufweisen.

5. Verfahren gemäß Anspruch 1 bis 4, dadurch gekennzeichnet, daß man als Komponente d) organische Zinnverbindungen, die keine sauren Reste abspalten können, verwendet.

6. Verfahren gemäß Anspruch 1 bis 5, dadurch gekennzeichnet, daß man als Komponente b) Polyhydroxypolyether des Molekulargewichtsbereichs 2000 bis 8000 verwendet, deren Polyetherketten aus 30 bis 60 Gew.-% Ethylenoxid-Einheiten und 70 bis 40 Gew.-% Propylenoxid-Einheiten bestehen, und deren Hydroxylgruppen zu mindestens 90% aus sekundären Hydroxylgruppen bestehen.

**Revendications**

1. Procédé de préparation d'objets moulés élastiques éventuellement alvéolaires à couche de surface fermée en élastomères de polyuréthanne-polyurée par conversion d'un mélange de réaction consistant en:

a) des polyisocyanates organiques,
b) des polyhydroxypolyéthers de poids moléculaire 1 000 à 12 000,
c) des di- ou polyamines aromatiques servant d'agents d'allongement des chaînes,
d) des catalyseurs pour la réaction entre les groupes hydroxy et les groupes isocyanate, et
e) le cas échéant, les agents gonflants, produits auxiliaires et additifs connus en soi dans la chimie des polyuréthannes,

le mélange de réaction étant travaillé en système one-shot par la technique de moulage réactif par injection et les réactifs étant mis en oeuvre en quantités correspondant à un indice d'isocyanate de 70 à 130, caractérisé en ce que l'on utilise en tant que composant b) des polyhydroxypolyéthers dont les chaînes de polyéther consistent pour 10 à 80% en poids en motifs d'oxyde d'éthylène, et dont les groupes hydroxy consistent pour au moins 50% en groupes hydroxy secondaires.

2. Procédé selon la revendication 1, caractérisé en ce que l'on utilise en tant que composant a) des polyisocyanates aromatiques liquides à la température d'opération.

3. Procédé selon les revendications 1 et 2, caractérisé en ce que l'on utilise le composant c) en quantités de 5 à 50% en poids, par rapport au composant b).

4. Procédé selon les revendications 1 à 3, caractérisé en ce que l'on utilise en tant que composant c) des diamines aromatiques portant en position ortho du premier groupe amino au moins un substituant alkyle et en position ortho du deuxième groupe amino deux substituants alkyle contenant chacun 1 à 3 atomes de carbone.

5. Procédé selon les revendications 1 à 4, caractérisé en ce que l'on utilise en tant que composant d) des composés organiques de l'étain incapables de libérer des restes acides.

6. Procédé selon les revendications 1 à 5, caractérisé en ce que l'on utilise en tant que composant b) des polyhydroxypolyéthers de poids moléculaire 2 000 à 8 000 dont les chaînes de polyéther consistent pour 30 à 60% en poids en motifs d'oxyde d'éthylène et pour 70 à 40% en poids en motifs d'oxyde de propylène, et dont les groupes hydroxy consistent pour au moins 90% en groupes hydroxy secondaires.

## Claims

1. Process for the production of optionally cellular elastic shaped articles having an impervious surface layer of polyurethane-polyurea elastomers by reacting a reaction mixture consisting of:

a) organic polyisocyanates,
b) polyhydroxy polyethers of the molecular weight range of 1,000 to 12,000.
c) aromatic diamines or polyamines as chain-extending agents,
d) catalysts for the reaction between hydroxyl and isocyanate groups and
e) optionally the blowing agents, auxiliaries and additives known in polyurethane chemistry,

the reaction mixture being processed as a one-shot system by the reaction injection-moulding technique and the reactants being used in quantities corresponding to an isocyanate index of 70 to 130, characterised in that polyhydroxy polyethers, 10 to 80% by weight of whose polyether chains consist of ethylene oxide units and at least 50% of whose hydroxyl groups consist of secondary hydroxyl groups, are used as component b).

2. Process according to Claim 1, characterised in that aromatic polyisocyanates which are liquid at the processing temperature are used as component a).

3. Process according to Claim 1 and 2, characterised in that component c) is used in quantities of 5 to 50% by weight, based on component b).

4. Process according to Claim 1 to 3, characterised in that aromatic diamines which contain at least one alkyl substituent in the ortho-position to the first amino group and 2 alkyl substituents each containing 1 to 3 carbon atoms in the ortho-position to the second amino group, are used as component c).

5. Process according to Claim 1 to 4, characterised in that organotin compounds which are unable to split off any said radicals are used as component d).

6. Process according to Claim 1 to 5, characterised in that polyhydroxy polyethers of the molecular weight range of 2,000 to 8,000, whose polyether chains consist of 30 to 60% by weight of ethylene oxide units and 70 to 40% by weight of propylene oxide units, and 90% of whose hydroxyl groups consist of secondary hydroxyl groups, are used as component b).